# EUROPÄISCHE PATENTSCHRIFT

(11) **EP 0 433 699 B1**
(45) Veröffentlichungstag und Bekanntmachung des Hinweises auf die Patenterteilung: **12.06.1996**
(21) Anmeldenummer: 90122430.3
(22) Anmeldetag: 23.11.1990
(51) Int. Cl.: H04L 12/56

(54) **Schaltungsanordnung für Kommunikationseinrichtungen mit asynchronem Transfermodus**
Circuit arrangement for communication devices with asynchronous transfer mode
Arrangement de circuit pour des dispositifs de communication fonctionnant en mode de transfert asynchrone

(30) Priorität: 22.12.1989 DE 3942740
(43) Veröffentlichungstag der Anmeldung: 26.06.1991
(73) Patentinhaber: SIEMENS AKTIENGESELLSCHAFT, D-80333 München (DE)
(72) Erfinder: Wallmeier, Eugen, Dr., W-8000 München 70 (DE)

(56) Entgegenhaltungen:
- IEEE INTERNATIONAL CONFERENCE ON COMMUNICATIONS '89 11. Juni 1989, BOSTON US Seiten 415 - 422; P. JOOS ET AL.: 'A Statistical Bandwidth Allocation and usage monitoring Algorithm for ATM Networks'
- IEEE INFOCOM '89 THE CONFERENCE ON COMPUTER COMMUNICATIONS Bd. II, 23. April 1989, OTTAWA , CA Seiten 701 - 710; A. GERSHT ET AL.: 'A congestion control framework for atm networks'
- IEEE GLOBAL TELECOMMUNICATIONS CONFERENCE & EXHIBITION Bd. 1, 28. November 1988, HOLLYWOOD , US Seiten 203 - 207; G.M. WOODRUFF ET AL.: 'A Congestion control Framework for High-Speed integrated packetized transport'

## Beschreibung

Die Erfindung betrifft eine Schaltungsanordnung für Kommunikationseinrichtungen mit asynchronem Transfermodus (ATM), in denen für jede virtuelle Verbindung
einerseits eine Spitzenbitrate sowie eine mittlere Bitrate durch Speicherung entsprechender Daten in einer ATM-Vermittlungseinrichtung festgelegt ist, und
andererseits überwacht wird, ob der von ihr geführte ATM-Nachrichtenstrom hinsichtlich tatsächlicher mittlerer Bitrate und tatsächlicher Spitzenbitrate die gespeicherten entsprechenden Raten-Werte einhält oder übersteigt, und
außerdem bei einem Übersteigen entsprechende Gegenmaßnahmen eingeleitet werden,
und in denen die Zulässigkeit des Einrichtens einer neuen virtuellen Verbindung über eine jede der für sie in Frage kommenden ATM-Leitungen anhand eines jeweils leitungsbezogenen als zulässig festgelegten Bitraten-Maximalwertes geprüft wird, wobei überprüft wierd, ob die zu den gespeicherten Bitraten-Werten durch die neue virtuelle Verbindung hinzukommenden Bitraten-Werte zu einer diese Zulässigkeit verneinenden Überschreitung des Bitraten-Maximalwertes führen.

Schaltungsanordnungen dieser Art sind bekannt durch das "International Zürich Seminar on Digital Communications" (März 1986) mit der Druckschrift "New Directions in Communications" (Abschnitt A3.1 bis A3.8, von J.B. Turner) und ferner durch die europaïschen Patentanmeldungen EP-A-0 310 173, EP-A-0 329 005 und EP-A-0 419 959, veröffentlicht am 3, April 1991. In Kommunikationseinrichtungen mit asynchronem Transfermodus (ATM) werden bekanntlich virtuelle Verbindungen eingerichtet. Hierunter sind Verkehrsbeziehungen zu verstehen zwischen jeweils wenigstens zwei Teilnehmerstellen, wobei außer diesen beiden Teilnehmerstellen auch der Verbindungsweg für die jeweilige virtuelle Verbindung festgelegt ist. Nachrichtenblöcke werden zwischen diesen beiden Teilnehmerstellen nicht ununterbrochen sondern in entsprechenden Zeitabständen, und zwar je nach Bedarf, übertragen. Jeder der zu übertragenden Nachrichtenblöcke ist am Anfang mit der Adresse jeweils derjenigen Teilnehmerstelle versehen, zu der hin der jeweilige Nachrichtenblock übermittelt werden soll. Für die Nachrichtenblöcke jeweils einer virtuellen Verbindung wird bei Einrichtung der letzteren ein bestimmter Übertragungsweg festgelegt, der über verschiedene ATM-Leitungen geführt wird.

Die ATM-Leitungen weisen eine bestimmte Übertragungskapazität auf, die nicht überschritten werden kann. Diese Übertragungskapazität kommt in einer bestimmten Bitraten pro Zeiteinheit zum Ausdruck. Bei der Einrichtung der virtuellen Verbindungen werden diese festgelegt - wie bereits gesagt - auf bestimmte ATM-Leitungen. - Wird nun eine neue virtuelle Verbindung eingerichtet, so ist bei jeder dafür wegemäßig und richtungsmäßig in Frage kommenden ATM-Leitung jeweils neu zu überprüfen, ob auf derselben noch genügend Übertragungskapazität frei ist, so daß die neue virtuelle Verbindung über sie eingerichtet werden kann, ohne daß dadurch vorgegebene Verkehrsgüteanforderungen unerfüllt bleiben. Es darf durch eine Überlastung einer ATM-Leitung durch zu viele Nachrichtenströme von entsprechenden virtuellen Verbindungen nicht dazu kommen, daß die Nachrichtenblöcke in entsprechenden Pufferspeichern bis zu ihrer Aussendung über die betreffende ATM-Leitung zu lange gespeichert werden, so daß sie eine zu starke Verzögerung erfahren. Ebenso darf es nicht vorkommen, daß solche Pufferspeicher überlaufen. Sowohl eine zu lange Zeitverzögerung bei der Weitergabe von Nachrichtenblöcken als auch ein Verlust von Nachrichtenblöcken stellt die vorgegebenen Verkehrsgüteanforderungen in Frage, d.h. sie bleiben unerfüllt oder werden nur ungenügend erfüllt.

In dem zuvor beschriebenen Zusammenhang insbesondere durch die bereits genannte europaïsche Patentanmeldung EP-A-0 419 959 ist bereis vorgeschlagen worden, daß jeder rufende Teilnehmer bei Einrichtung einer neuen virtuellen Verbindung meldet, mit welcher mittleren Bitrate und mit welcher Spitzenbitrate er Nachrichtenblöcke zur Aussendung zu bringen beabsichtigt. Entsprechende Werte für diese Bitraten werden gespeichert, und im Verlauf der virtuellen Verbindung wird ständig überwacht, ob der betreffende Teilnehmer sich bei der Abgabe von Nachrichtenblöcken daran hält, daß die bei Einrichtung der betreffenden virtuellen Verbindung gemeldeten Bitraten im praktischen Betrieb nicht überschritten werden. Werden sie überschritten, so werden entsprechende Gegenmaßnahmen getroffen. So kann z.B. eine virtuelle Verbindung unterbrochen werden, oder von den über eine virtuelle Verbindung von der betreffenden Teilnehmerstelle zur Aussendung gebrachten Nachrichtenblöcken werden einige verworfen, d.h. nicht übertragen, und zwar so viele, daß die gemeldeten Bitraten wieder eingehalten sind; ferner kann vorgesehen werden, daß bei kurzzeitiger Überschreitung der jeweils angemeldeten Spitzenbitrate einige Nachrichtenblöcke etwas verzögert weitergegeben werden, wodurch eine Überschreitung der Spitzenbitrate eliminiert ist. - Es gibt verschiedene Methoden und Verfahren, die alle entsprechende Gegenmaßnahmen zum Inhalt haben, also Gegenmaßnahmen gegen eine Überschreitung von bei Einrichtung einer virtuellen Verbindung jeweils gemeldeten Bitraten (mittlere Bitrate und Spitzenbitrate).

In bekannten Schaltungsanordnungen der eingangs angegebenen Art wird also zum einen laufend jede virtuelle Verbindung daraufhin überwacht, ob bei der Abgabe von Nachrichtenblöcken die angemeldeten Werte für mittlere Bitrate und Spitzenbitrate eingehalten werden; zum anderen ist es für jede ATM-Leitung von Bedeutung, daß bei Einrichtung jeweils einer neuen virtuellen Verbindung überprüft wird, ob die jeweils für eine solche Einrichtung verkehrsrichtungsmäßig in Frage kommende ATM-Leitung in der beschriebenen Weise überlastet wird. Würde man nun hierzu jeweils für eine ATM-Leitung die Werte für die mittleren Bitraten sämtlicher über sie eingerichteten virtuellen Verbindungen addieren, so könnte der Fall eintreten, daß infolge Schwankungen der aktuellen Bitraten jeder der über die eingerichteten virtuellen Verbindungen die Gesamtbelastung der betreffenden ATM-Leitung vorübergehend überschritten wird. Dies würde zu unzulässig großen Verzögerungen bei der Übertragung der Nachrichtenblöcke oder zur Überfüllung entsprechender Pufferspeicher und einem Verlust von Nachrichtenblöcken oder zu ähnlichen Beeinträchtigungen der Nachrichtenblock-Übermittlung führen, wodurch die vorgegebenen Verkehrsgüteanforderungen unerfüllt oder mangelhaft erfüllt bleiben. Nachrichten können durch den Fortfall einzelner zu ihnen gehörender Nachrichtenblöcke so verstümmelt werden, daß sie unbrauchbar werden oder sogar zu Falschinformationen führen.

Aus den zuvor erläuterten Gründen ist deshalb in bekannten Einrichtungen der eingangs angegebenen Art vorgesehen, daß für eine ATM-Leitung nicht die mittleren Bitraten aller betreffenden einzelnen virtuellen Verbindungen, sondern stattdessen deren Spitzenbitraten aufsummiert werden. Dadurch wird also gewährleistet, daß auch bei einer Inanspruchnahme jeweils der angemeldeten Spitzenbitrate durch jeden der betreffenden Teilnehmer eine Überlastung der betreffenden ATM-Leitung noch nicht eintreten kann. Also auch für diesen Extremfall ist gewährleistet, daß die vorgegebenen Verkehrsgüteanforderungen durch jede der ATM-Leitungen erfüllt bleiben. Diese Lösung ist also im Hinblick auf die Erfüllung der vorgegebenen Verkehrsgüteanforderungen einwandfrei, jedoch bleibt bei dieser Methode auf den ATM-Leitungen in der Regel ein Teil der verfügbaren Übertragungskapazität unausgenutzt.

Darüber hinaus ist für Schaltungsanordnungen der eingangs genannten Art durch "IEEE Global Telecommunications Conference & Exhibition", Band 1, 28. November 1988, Hollywood, USA, Seite 203 bis 207, G. Woodruff et al.: "A Congestion Control Framework for High-Speed Integrated Packetized Transport" vorgeschlagen worden, für die Übertragung von Nachrichtenblöcken im Zuge von virtuellen Verbindungen über ATM-Leitungen ein statistisches Multiplexprinzip zu benutzen. Dabei ist aufgeführt, das für ein solches statistisches Multiplexen für die einzelnen virtuellen Verbindungen geeignete Verkehrsparameter festzulegen sind, wie z.B. mittlere Bandbreite, Spitzenbandbreite, Burstverhalten usw.. In der Druckschrift "IEEE International Conference on Communications '89, 11. Juni 1989, Boston, USA, Seite 415 bis 422, P. Joos et al.: "A Statistical Bandwidth Allocation and Usage Monitoring Algorithm for ATM-Networks" ist darüber hinaus ein Verfahren angegeben, wie die Zulässigkeit des Einrichtens von virtuellen Verbindungen über ATM-Leitungen unter Berücksichtigung bereits belegter Übertragungskapazitäten überprüft werden kann. Dieses Verfahren sorgt dafür, daß die Auslastung einer ATM-Leitung einen zulässigen Grenzwert nur mit einer vorgegebenen Wahrscheinlichkeit überschreitet. Es wird dabei vorausgesetzt, daß die Summenbitrate aller virtuellen Verbindungen, die über eine ATM-Leitung geführt werden, einer Normalverteilung genügt und von jeder virtuellen Verbindung die mittlere Bitrate und die Varianz bzw. Standardabweichung der Bitrate bekannt sind. In der Praxis stellt jedoch die Varianz eine insbesondere für die Teilnehmereinrichtungen schwer erfaßbare Größe dar.

Der Erfindung liegt die Aufgabe zugrunde, eine Schaltungsanordnung der eingangs angegebenen Art derart auszugestalten, daß mit relativ einfachen Mitteln die Zulässigkeit des Einrichtens von virtuellen Verbindungen über ATM-Leitungen unter Berücksichtigung bereits belegter Übertragungskapazität und vorgegebener Verkehrsguteanforderungen überprüft werden kann.

Die Erfindung löst die ihr gestellte Aufgabe auf zweierlei Weise, und zwar gemäß einer ersten Version dadurch, daß eine Bitraten-Auswertungseinrichtung vor Einrichtung einer neuen virtuellen Verbindung in jeder betreffenden ATM-Leitung
erstens für jede der über die Letztere bereits eingerichteten virtuellen Verbindungen sowie für die einzurichtende neue virtuelle Verbindung jeweils ein Produkt aus dem festgelegten mittleren Bitratenwert einerseits und der Differenz zwischen dem festgelegten Spitzenbitratenwert und dem festgelegten mittleren Bitratenwert andererseits bildet,
zweitens alle auf diese Weise - betreffend diese ATM-Leitung - gebildeten Produkte zu einer Produktesumme aufsummiert,
drittens hieraus einen Quadratwurzelwert bildet, viertens diesen Quadratwurzelwert mit einem Vergrößerungs-Faktor multipliziert, oder ihn durch den Kehrwert des Vergrößerungs-Faktors dividiert, fünftens zu dem auf diese Weise vergrößerten Quadratwurzelwert die festgelegten mittleren Bitratenwerte der diese ATM-Leitung betreffenden virtuellen Verbindungen, also der bereits eingerichteten sowie der neueinzurichtenden virtuellen Verbindungen, hinzuaddiert,
und daß anhand eines so ermittelten Auswertungsergebnisses in der betreffenden ATM-Vermittlungseinrichtung entschieden wird, ob eine neu einzurichtende Verbindung noch über die jeweils betreffende ATM-Leitung geführt wird, indem diese Verbindung nur eingerichtet wird, wenn dieses Auswertungsergebnis den für die betreffende ATM-Leitung vorgegebenen zulässigen Bitratenmaximalwert, der die Einhaltung der vorgegebenen Verkehrsgüteanforderungen bezüglich eines Verlustes an ATM-Zellen und/oder von Wartedauern garantiert, nicht überschreitet. Eine zweite Version ist im Kennzeichen des Patentanspruches 4 angegeben.

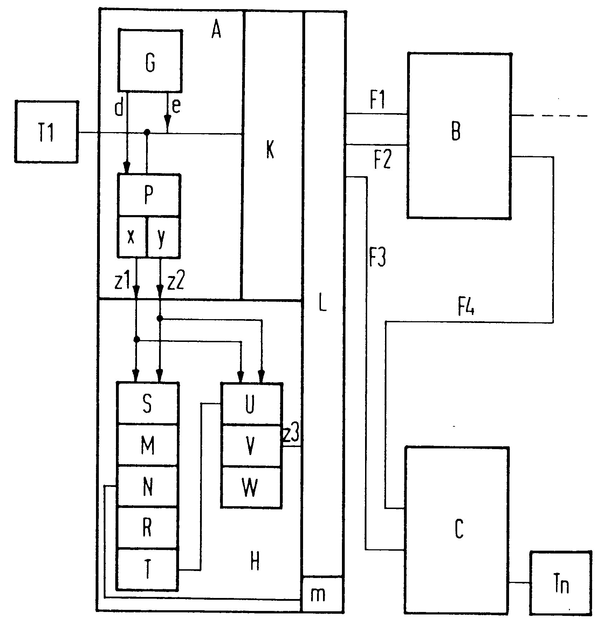

In der Zeichnung ist ein Ausführungsbeispiel der Erfindung nur in wesentlich zu ihrem Verständnis beitragenden Bestandteilen dargestellt, worauf sie jedoch keineswegs beschränkt ist.

Es ist eine Mehrzahl von ATM-Vermittlungsstellen A, B und C vorgesehen. Diese stehen über (z.B. PCM)-Leitungssysteme F1 bis F4 in der dargestellten Weise miteinander in Verbindung. Jedes dieser Leitungssysteme enthält eine größere Anzahl von parallelen ATM-Leitungen. Diese sind durch Kanäle dieser Leitungssysteme in an sich bekannter Weise realisiert. Bei den ATM-Vermittlungseinrichtungen handelt es sich um Kommunikationseinrichtungen mit asynchronem Transfermodus. Kommunikationseinrichtungen und entsprechende Vermittlungseinrichtungen sind an sich bekannt. Hierzu sei auf die eingangs bereits genannten Literaturstellen und ferner auf folgende weitere Literaturstellen hingewiesen: "Elektronische Nachrichtentechnik", Berlin, Heft 39 (1989) Nr. 1, ferner ETR36 (1987) Heft 7/8-Juli/August 1987 (Hestra-Verlag/Darmstadt) und "telcom report" 10 (1987) Heft 1, Seite 7 ff und Seite 12 ff, sowie Heft 1 von 1988, Seite 14 ff, und Heft 5 von 1988, Seite 176 ff.

Die in der Zeichnung dargestellte ATM-Vermittlungseinrichtung umfaßt u.a. ein Koppelfeld K. Ferner ist eine von mehreren Anschlußeinrichtungen P dargestellt; diese können teilnehmerindividuell oder verbindungsindividuell sein. Sind die Anschlußeinrichtungen verbindungsindividuell, so werden sie dann, wenn ein Teilnehmer eine virtuelle Verbindung einzurichten wünscht, jeweils einzeln für die Dauer der virtuellen Verbindung dem betreffenden Teilnehmer zugeschaltet. Die Anschlußeinrichtung P umfaßt u.a. einen Speicher x für Informationen über eine Spitzenbitrate und einen Speicher y für Informationen über eine mittlere Bitrate. Bezüglich dieser Informationen ist nachfolgend immer nur von der Spitzenbitrate sowie von der mittleren Bitrate die Rede. Wünscht ein Teilnehmer über seine Teilnehmerstelle, z.B. T1, eine virtuelle Verbindung herzustellen, so ist bzw. wird er zunächst mit einer Anschlußeinrichtung P verbunden. Vor Einrichtung einer virtuellen Verbindung überträgt er an die Vermittlungseinrichtung A Informationen bezüglich einer Spitzenbitrate sowie einer mittleren Bitrate. Diese Informationen werden in den Speichern x und y gespeichert. Hierin sind also die Spitzenbitrate und die mittlere Bitrate eingetragen. Die Spitzenbitrate gibt an, mit welcher Anzahl von Bit pro Kunde maximal dieser Teilnehmer ATM-Zellen auf die von ihm gewünschte und noch einzurichtende virtuelle Verbindung abzugeben beabsichtigt. Die mittlere Bitrate gibt an, wieviel Zellen pro Zeiteinheit er im Mittel auf die gewünschte virtuelle Verbindung abzugeben beabsichtigt.

Die von einer rufenden Teilnehmerstelle für eine virtuelle Verbindung angegebene Spitzenbitrate und mittlere Bitrate sind bindend für die Dauer dieser einzurichtenden virtuellen Verbindung. Ist eine solche Verbindung in weiter unten noch etwas genauer beschriebener Weise eingerichtet, und hat ein Transfer von ATM-Zellen begonnen, so wird mit Hilfe einer Überwachungseinrichtung G überwacht, ob der über die betreffende virtuelle Verbindung geführte ATM-Nachrichtenstrom hinsichtlich mittlerer Bitrate und hinsichtlich Spitzenbitrate die gespeicherten (x und y) entsprechenden Raten-Werte einhält oder übersteigt. Die Uberwachungseinrichtung G steht hierzu über einen Weg d mit der Anschlußeinrichtung P in Verbindung und erhält über diesen Weg die Spitzenbitrate und die mittlere Bitrate aus den Speichern x und y. Uber einen Weg e steht die Uberwachungseinrichtung G mit der virtuellen Verbindung in Kontakt und überprüft über diesen Weg die über diese virtuelle Verbindung laufenden ATM-Zellen, also den über diese virtuelle Verbindung geführten ATM-Nachrichtenstrom und ermittelt aus diesem die tatsächlichen Werte der mittleren Bitrate und der Spitzenbitrate dieses Nachrichtenstromes. Ferner vergleicht sie diese Werte mit den gespeicherten (x,y) Werten. Für die Ausbildung einer solchen Uberwachungseinrichtung möge eine Einrichtung gemäß der eingangs bereits genannten europaïschen Patentanmeldung EP-A-0 419 959 dienen.

Übersteigt der von einer virtuellen Verbindung geführte ATM-Nachrichtenstrom hinsichtlich tatsächlicher mittlerer Bitrate und/oder Spitzenbitrate die gespeicherten (x, y) entsprechenden Raten-Werte, so werden von der Uberwachungseinrichtung G entsprechende Gegenmaßnahmen eingeleitet. Diese können darin bestehen, daß eine virtuelle Verbindung unterbrochen wird, oder darin, daß von den über eine virtuelle Verbindung geführten ATM-Zellen einige nicht weitergeleitet, sondern unterdrückt, d.h. gelöscht, werden, und zwar so viele, daß die durch die Spitzenbitrate und/oder die mittlere Bitrate gesetzten Bedingungen erfüllt werden; ferner kann als Gegenmaßnahme auch vorgesehen werden, daß von der Teilnehmerstelle T1 abgegebene Nachrichtenblöcke etwas verzögert weitergegeben werden, was insbesondere dann sinnvoll ist, wenn die Bitrate der auf der virtuellen Verbindung übermittelten ATM-Zellen nur kurzzeitig den Wert der Spitzenbitrate übersteigt.

Es sind ferner Vorkehrungen getroffen, mit denen die Zuverlässigkeit des Einrichtens einer neuen virtuellen Verbindung über eine jede der für sie infrage kommenden ATM-Leitungen anhand eines jeweils leitungsbezogen als zulässig festgelegten Bitraten-Maximalwertes geprüft wird. Für die bereits genannten ATM-Leitungen, die über die Verbindungswege F1 bis F4 geführt sind, ist jeweils ein Bitraten-Maximalwert festgelegt. Mit diesem Wert ist festgelegt, wieviel Bit pro Zeiteinheit maximal über die betreffende ATM-Leitung übertragen werden dürfen. Eine erforderliche technische Sicherheit ist hierbei bereits inbegriffen. Die Zulässigkeit einer neuen virtuellen Verbindung über eine für sie infrage kommende ATM-Leitung wird mit Hilfe einer Bitraten-Auswertungseinrichtung H bewerkstelligt. Eine für das Einrichten einer neuen virtuellen Verbindung in Frage kommende ATM-Leitung ist in an sich bekannter Weise immer eine solche, die in der gewünschten Verkehrsrichtung führt. Diese Zusammenhänge sind an sich seit langem allgemein bekannt und bedürfen hier keiner weiteren Erläuterung. Jedoch bestehen zum Erreichen einer angewählten anderen Teilnehmerstelle, z.B. Tn, immer mehrere Verbindungswege und auf den Verbindungswegen bestehen in der Regel mehrere parallele ATM-Leitungen, die zu dem gleichen Ziel führen. Darum ist es abgesehen von der richtungsbezogenen Auswahl einer geeigneten ATM-Leitung auch erforderlich, daß für das Einrichten einer neuen virtuellen Verbindung immer eine solche ATM-Leitung aus den überhaupt für ein Einrichten der betreffenden virtuellen Verbindung in Frage kommenden ATM-Leitungen ausgewählt wird, die - anhand eines jeweils leitungsbezogen als zulässig festgelegten Bitratenmaximalwertes geprüft - noch in entsprechendem Umfang freie Übertragungskapazität hat. Ein entsprechender Bitraten-Maximalwert pro ATM-Leitung sei in einem Speicher W gespeichert, wo also für jede einzelne ATM-Leitung der zugehörige Bitraten-Maximalwert eingetragen ist. Bei der Prüfung der Zulässigkeit des Einrichtens einer neuen virtuellen Verbindung über eine dafür in Frage kommende ATM-Leitung wird überprüft, ob solche freie Ubertragungskapazität noch vorhanden ist, genauer gesagt, ob die für die über die betreffenden ATM-Leitung bereits eingerichteten virtuellen Verbindungen gespeicherten Bitraten-Werte durch die durch die neue virtuelle Verbindung hinzukommenden Bitraten-Werte zu einer diese Zulässigkeit verneinenden Überschreitung des Bitraten-Maximalwertes führen. Mit anderen Worte gesagt bedeutet dies, daß für die über die betreffende ATM-Leitung bereits eingerichteten virtuellen Verbindungen Bitratenwerte bereits gespeichert sind, daß zu diesen Bitraten-Werte durch die neue virtuelle Verbindung hinzukommen, und daß alle diese Bitraten zusammen überprüft werden;dabei können sie die Zulässigkeit des Einrichtens der neuen virtuellen Verbindung über die betreffende ATM-Leitung verneinen, nämlich dann, wenn die der neuen virtuellen Verbindung entsprechenden Bitratenwerte letztlich zu einer Uberschreitung des Bitraten-Maxmalwertes führen, der für die betreffende ATM-Leitung festgelegt ist.

Wie dies mit Hilfe der Bitraten-Auswertungseinrichtung H bewerkstelligt wird, wird anschließend erläutert. Die Bitraten-Auswertungseinrichtung H erhält über die Wege z1 und z2 die mittlere Bitrate und die Spitzenbitrate für die neu einzurichtende virtuelle Verbindung. Sie erhält diese Spitzenbitrate und diese mittlere Bitrate aus den oben bereits genannten Speichern x und y. Die Bitraten-Auswertungseinrichtung H erhält über ähnliche Wege (z1, z2) für jede der virtuellen Verbindungen, die über die betreffende, einer Überprüfung zu unterziehende ATM-Leitung bereits geführt sind, ebenso wie für die neue virtuelle Verbindung jeweils die Spitzenbitrate und die mittlere Bitrate. Die Bitraten-Auswertungseinrichtung H bildet für das Bitraten-Paar (Spitzenbitrate + mittlere Bitrate) einer jeden über diese ATM-Leitung geführten bzw. zu führenden virtuellen Verbindung eine Differenz jeweils zwischen Spitzenbitrate und mittlerer Bitrate. Diese Differenzbildung vollzieht die Bitraten-Auswertungseinnrichtung H mit einem Differenz-Bildner S. Dieser gibt alle auf diese Weise gebildeten Differenzwerte weiter an einen Multiplikator M und gibt ihm außerdem jeweils auch unabhängig von der Differenzbildung die vom Speicher y erhaltene jeweilige mittlere Bitrate weiter. Der Multiplikator M bildet jeweils pro betreffende virtuelle Verbindung aus der Differenz und aus der mittleren Bitrate ein Produkt und gibt dieses Produkt an einen Addierer N weiter. Der Addierer N summiert alle auf die zuvor beschriebene Weise für die betreffende ATM-Leitung pro virtuelle Verbindung gebildeten Produkte auf. Sind mit Hilfe des Differenzbildners, des Multiplikators und mit Hilfe des Addierers auf die beschriebene Weise jeweils die mittlere Bitrate und die Spitzenbitrate einer jeden der betreffenden virtuellen Verbindungen erfaßt, so liefert der Addierer N die von ihm gebildete Produktesumme an einen Radizierer R weiter, der aus der Produktesumme einen Quadratwurzelwert bildet. Der Radizierer R liefert diesen Quadratwurzelwert weiter an einen Multiplizierer T, der seinerseits den Quadratwurzelwert mit einem Vergrößerungsfaktor multipliziert, der weiter unten noch im einzelnen erklärt wird. Dieser mit Hilfe des Vergrößerungsfaktors im Multiplizierer T vergrößerte Quadratwurzelwert wird an einen weiteren Addierer U weitergeleitet. Dieser empfängt nicht nur diesen vergrößerten Quadratwurzelwert, sondern über den Weg z2 auch sämtliche mittleren Bitraten der über die betreffende ATM-Leitung bereits eingerichteten virtuellen Verbindungen und die mittlere Bitrate für die einzurichtende neue virtuelle Verbindung. Der Addierer U addiert alle diese mittleren Bitraten zu dem bereits genannten vergrößerten Quadratwurzelwert und bildet damit das Auswertungsergebnis. Das Auswertungsergebnis kann darüber hinaus noch etwas präzisiert werden. Demgemäß ist vorgesehen, daß der Addierer U zusätzlich noch über den Weg z1 sämtliche Spitzenbitraten der über die betreffende ATM-Leitung bereits eingerichteten virtuellen Verbindungen sowie der neu einzurichtenden virtuellen Verbindung erhält. Der Addierer U wählt unter diesen Spitzenbitraten die größte aus und addiert auch noch diese zu der Summe aus dem vergrößerten Quadratwurzelwert und den mittleren Bitraten, und bildet auf diese Weise das Auswertungsergebnis.

Das auf diese Weise letztendlich (so oder so) ermittelte Auswerteergebnis dient in der ATM-Vermittlungseinrichtung dazu, zu entscheiden, ob eine neu einzurichtende Verbindung noch über die jeweils betreffende ATM-Leitung geführt wird, indem diese Verbindung nur dann eingerichtet wird, wenn dieses Auswertungsergebnis den für die betreffende ATM-Leitung vorgegebenen zulässigen Bitraten-Maximalwert nicht überschreitet. Hierzu ist ein Vergleicher V vorgesehen, der einerseits das genannte Auswertungsergebnis vom Addierer U erhält und andererseits den für die betreffende ATM-Leitung im Speicher W gespeicherten vorgegebenen zulässigen Bitraten-Maximal, der die Einhaltung der vorgegebenen Verkehrsgüte-Anforderungen bezüglich eines Verlustes an ATM-Zellen und/oder von Wartedauern garantiert. Stellt der Vergleicher V nun fest, daß das Auswertungsergebnis den gespeicherten Bitraten-Maximalwert nicht überschreitet, so kann die neue virtuelle Verbindung über die betreffende ATM-Leitung eingerichtet werden. Anderenfalls, wenn also das Auswertungsergebnis den vorgegebenen zulässigen Bitraten-Maximalwert, gespeichert im Speicher W, überschreitet, wird eine andere, für die Einrichtung der gewünschten virtuellen Verbindung geeignete ATM-Leitung vor-ausgewählt und es wird auch bezüglich dieser eine gleiche Überprüfung durchgeführt.

In der zuvor im einzelnen beschriebenen Weise nimmt also die Bitraten-Auswertungseinrichtung H einzeln für jede der über die betreffende ATM-Leitung bereits eingerichteten virtuellen Verbindungen sowie für die einzurichtende neue virtuelle Verbindung jeweils eine Auswertung der für jede dieser Verbindungen einzeln vorliegenden mittleren Bitraten und Spitzenbitraten vor. Das Ergebnis hiervon liefert die Bitraten-Auswertungseinrichtung H über den Weg z3 an eine Leitungsanschlußschaltung L, die gemeinsam ist für alle abgehenden ATM-Leitungen, die über die Verbindungswege F1 bis F3 führen (entsprechend auch F4). Ist für die Einrichtung einer neuen virtuellen Verbindung eine entsprechende Auswahl bezüglich einer geeigneten ATM-Leitung getroffen, so werden entsprechende Verbindungswege in der für die ATM-Technik bekannten Weise über das Koppelfeld K zur Verfügung gestellt.

In Abweichung von der zuvor beschriebenen Arbeisweise der Bitraten-Auswertungseinrichtung kann für diese auch vorgesehen sein, daß sie die pro virtuelle Verbindung gebildeten Produkte pro virtuelle Verbindung in Zuordnung zu der jeweiligen ATM-Leitung in einem Speicher m speichert, und daß sie bei Bildung der Produktesumme mit ihrem Addierer N auf diese gespeicherten Produkte zurückgreift. Dieser Addierer erfaßt dann von den gespeicherten Produkten immer alle diejenigen, die zu als eingerichtet noch bestehenden virtuellen Verbindungen gehören. Die übrigen Produkte, die inzwischen bereits wieder aufgehobenen virtuellen Verbindungen entsprechen bzw. entsprachen, werden gelöscht.

Auch kann die Bitraten-Auswertungseinrichtung H dahingehend abgewandelt werden, daß die Abfolge der beschriebenen einzelnen Operationen teilweise umgekehrt wird. So kann z.B. vorgesehen werden, daß die Bitraten-Auswertungseinrichtung einerseits die Produktesumme wie beschrieben bildet, daß sie aber andererseits den die jeweilige ATM-Leitung betreffenden Bitraten-Maximalwert nicht unmittelbar zu dem beschriebenen Vergleich heranzieht, sondern daß sie von diesem die mittleren Bitraten sämtlicher virtueller Verbindungen (also aller über die betreffende ATM-Leitung bereits eingerichteten virtuellen Vebindungen sowie der neu einzurichtenden virtuellen Verbindung) subtrahiert, ggfs. (s.o.) auch die größte vorkommende Spitzenbitrate und daß sie von der sich hieraus ergebenden Differenz nach deren Teilung durch den weiter oben genannten Vergrößerungsfaktor einen Quadratwert bildet, und daß sie diesen dann mit der vorerwähnten Produktesumme vergleicht. In diesem Falle ist die in der Zeichnung dargestellte Einrichtung U als ein Subtrahierer ausgebildet, der vom Speicher W den zuvor genannten Bitraten-Maximalwert erhält und hiervon die im Speicher y gespeicherten und von diesem über z2 mitgeteilten mittleren Bitraten (und ggfs.auch die größte vorkommende Spitzenbitrate vom Speicher x über z1) subtrahiert. Die Einrichtung T wäre dann eine Teilungseinrichtung, die das Ergebnis der zuvor angegebenen Subtraktion durch den Vergrößerungsfaktor teilt (oder ein Multiplikator, der dieses Subtraktions-Ergebnis mit dem Kehrwert des Vergrößerungsfaktors multipliziert). Das von der Einrichtung T gelieferte Ergebnis wäre dann der Einrichtung R zuzuführen, die in diesem Falle als Quadrierer auszubilden wäre. Der Vegleicher V würde dann sowohl die Produktesumme vom Addierer N als auch das Quadrierungsergebnis vom Quadrierer R erhalten und diese Werte vergleichen. Nur, wenn die Produktesumme das Quadrierungsergebnis nicht übersteigt, wird (s.o.) die betreffende neue virtuelle Verbindung über die entsprechende ATM-Leitung eingerichtet, wozu der Vergleicher über den Weg z3 ein entsprechendes Signal an die Einrichtung L abgibt.

Ebenfalls können natürlich auch der Multiplikationsvorgang mit der Einrichtung T und die Operation (Radizieren bzw. Quadrieren) mit der Einrichtung R hinsichtlich ihrer Aufeinanderfolge vertauscht werden, wenn hierbei der Multiplikationsfaktor in der Einrichtung T zugleich entweder quadriert oder radiziert wird.

Wird in der zuvor erläuterten Weise die Abfolge der Operationen teilweise umgekehrt und wird in Zusammenhang damit anstelle der Operation des Radizierens eine Operation des Quadrierens vorgesehen (also anstelle eines Radizierers R ein ein Quadrierer R) so vereinfacht sich die betreffende Einrichtung, weil ein Quadrieren einfacher realisierbar ist als ein Radizieren.

Die in der Zeichnung dargestellte Bitraten-Auswertungseintung H besteht aus den Elementen S bis W. Diese Elemente sind Differenzbildner, Multiplizierer, Addierer, Radizierer, vorgesehen (also anstelle eines Radizierdenen Elemente führen einzeln die beschriebenen Operationen durch. Es ist jedoch auch möglich, die Bitraten-Auswertungseinrichtung H so auszubilden, daß mit einem für alle diese Operationen gemeinsamen Auswerter gearbeitet wird, der diese Operationen programmgesteuert abwickelt.

Es kann auch der Sonderfall eintreten, daß virtuelle Verbindungen mit einer besonders hohen Bitrate einzurichten sind. Bei den virtuellen Verbindungen dagegen mit Bitraten vergleichbarer Größe findet im praktischen Betrieb ein Ausgleich hinsichtlich der pro virtuelle Verbindungen stets etwas schwankenden Ist-Bitraten statt. Jedoch bilden virtuelle Verbindungen mit herausragenden Bitraten jeweils einen Sonderfall. Soll nun mit Sicherheit vermieden werden, daß durch solche Verbindungen bei Auftreten der Spitzenbitrate in ihnen ein Uberschreiten der Bitraten-Maximalwertes der betreffenden ATM-Leitung auftritt, so wird vorab deren Spitzenbitrate von dem Bitraten-Maximalwert der betreffenden ATM-Leitung abgezogen. Der sich hieraus ergebende Wert wird dann als Bitraten-Maximalwert verwendet und in der erfindungsgemäßen Weise zur Erlangung des Auswertungsergebnisses verwendet, wobei dann aber Werte dieser besonderen virtuellen Verbindung von dem Auswertungsprozeßausgeschlossen sind.

Ein wesentlicher Grundgedanke der Erfindung liegt darin, jeweils bei Einrichtung einer von einem Teilnehmer gewünschten neuen virtuellen Verbindung über eine bestimmte ATM-Leitung nicht lediglich zu Bitraten-Werten (mittlere Bitrate und/oder Spitzenbitrate) der bereits eingerichteten virtuellen Verbindungen einen entsprechenden Wert der neuen virtuellen Verbindung hinzuzuzählen und anhand eines so gebildeten Ergebnisses zu prüfen, ob die Einrichtung dieser neuen virtuellen Verbindung über diese ATM-Leitung noch zulässig ist; sondern bei jeder neuen einzurichtenden virtuellen Verbindung werden immer sämtliche Bitraten-Werte, also sowohl die der über die betreffende ATM-Leitung bereits eingerichteten virtuellen Verbindungen als auch die dieser gewünschten neuen virtuellen Verbindung, einer neuen und gemeinsamen Auswertung unterzogen. Dies geschieht nach Maßgabe der erfindungsgemäßen Merkmale. Danach werden von allen betreffenden virtuellen Verbindungen (also von den über die betreffende ATM-Leitung bereits eingerichteten virtuellen Verbindungen sowie von der über sie neu einzurichtenden virtuellen Verbindung) die mittleren Bitraten genommen und es wird hieraus die Summe gebildet; zu dieser Summe wird ein vergrößerter Quadratwurzelwert hinzuaddiert. Der betreffende Radikand ergibt sich aus einer Produktesumme, deren einzelne, den virtuellen Verbindungen entsprechende Produkte jeweils aus der mittleren Bitrate und der Differenz zwischen Spitzenbitrate und mittlerer Bitrate gebildet sind. Die Abfolge dieser Operationen kann aber auch (wie bereits erläutert) teilweise umgekehrt werden bei Verlagerung des Vergleichsvorgangs an eine andere Stelle der Abfolge dieser Operationen. Dies liegt alles im Rahmen der Erfindung.

Durch die Erfindung wird die Möglichkeit geschaffen, daß über die ATM-Leitungen mehr virtuelle Verbindungen, beziehungsweise virtuelle Verbindungen mit insgesamt einer größeren Anzahl von Bitraten eingerichtet werden können. Mit einer hochgradigen Wahrscheinlichkeit tritt der Fall nicht ein, daß auf eine ATM-Leitung im praktischen Betrieb Bitraten in solchem Umfang treffen, daß die Übertragungskapazität jeweils einer ATM-Leitung überschritten wird. Es sei angenommen, daß diese Wahrscheinlichkeit mit 10⁻⁹ gefordert wird. Im wesentlichen resultiert aus diesem Exponenten (- 9) die Größe des Vergrößerungsfaktors. Dieser beträgt bei einer Wahrscheinlichkeit (mit der also ein Verlust von Zellen eintritt) von 10⁻⁹ bis 10⁻¹⁰ etwa 8 bis 9; Randbedingungen hierbei sind die, daß a) eine ATM-Leitung mit einer Brutto-Transportkapazität ("Brutto" bedeutet, einschließlich Header der ATM-Zellen) von etwa 150 Mega-Bit pro Sekunde betrieben wird, b) die Spitzenbitraten der virtuellen Verbindungen, die über diese ATM-Leitung geführt werden, 2 Mega-Bit pro Sekunde nicht übersteigen und c) das Verhältnis von mittlerer Bitrate zu Spitzenbitrate bei jeder der betreffenden Verbindungen zwischen 0,1 und 0,9 liegt. Der Wurzelwert multipliziert mit diesem Faktor beschreibt das zu erwartende Schwanken der Gesamtheit der Bitraten sämtlicher über eine ATM-Leitung eingerichteten virtuellen Verbindungen (also aller bisher bereits eingerichteten virtuellen Verbindungen sowie der jeweils neu einzurichtenden virtuellen Verbindung). Das Auswertungsergebnis stellt jeweils eine mit obiger Wahrscheinlichkeit nicht überschrittene obere Grenze für die Gesamtheit der Bitraten dar, die durch die über eine ATM-Leitung eingerichteten virtuellen Verbindungen auf diese ATM-Leitung treffen. Das Auswertungsergebnis ist einerseits größer als die Summe aller mittleren Bitraten der Gesamtheit der virtuellen Verbindungen, die über eine ATM-Leitung eingerichtet sind; andererseits aber ist das Auswertungsergebnis zugleich wesentlich niedriger als die Summe aller Spitzenbitraten, die der Gesamtheit dieser virtuellen Verbindungen entsprechen. Das Auswertungsergebnis stellt sich vielmehr als ein zweckmäßiger Zwischenwert ein, bei dem die Übertragungsleistung der betreffenden ATM-Leitung mit der vorausgesetzten, zuvor erwähnten Wahrscheinlichkeit nicht überschritten wird. Insgesamt ergibt sich erfindungsgemäß eine wesentlich höhere Ausnutzbarkeit der verfügbaren ATM-Leitungen.

Bei der Erfindung geht es ganz allgemein darum, daß die Bitraten-Werte (jeweils Spitzenbitrate und mittlere Bitrate) aller über eine ATM-Leitung eingerichteten und der jeweils neu einzurichtenden virtuellen Verbindungen einerseits und der betreffende Maximal-Bitratenwert in einen Vergleich zueinander gesetzt werden. Dieser Vergleich erfolgt nach einer Gesetzmäßigkeit, die in den Patentansprüchen zum Ausdruck kommt. Die Abfolge der einzelnen Operationen kann so, wie in den Ansprüchen angegeben, jedoch auch in sinnfälligen weiteren Variationen hiervon vorgesehen sein.

## Patentansprüche

1. Schaltungsanordnung für Kommunikationseinrichtungen (A) mit asynchronem Transfermodus (ATM),
die geeignet sind, für jede virtuelle Verbindung einerseits eine Spitzenbitrate (x) sowie eine mittlere Bitrate (4) durch Speicherung entsprechender Daten in einer ATM-Vermittlungseinrichtung (z.B. A) festzulegen, und
andererseits zu überwachen (G), ob der von ihr geführte ATM-Nachrichtenstrom hinsichtlich tatsächlicher mittlerer Bitrate und tatsächlicher Spitzenbitrate die gespeicherten entsprechenden Raten-Werte einhält oder übersteigt, und
außerdem bei einem Übersteigen entsprechende Gegenmaßnahmen einzuleiten,
und wobei die Kommunikationseinrichtungen geeignet sind, die Zulässigkeit des Einrichtens einer neuen virtuellen Verbindung über eine jede der für sie in Frage kommenden ATM-Leitungen anhand eines jeweils leitungsbezogen als zulässig festgelegten Bitraten-Maximalwertes (w) zu prüfen, wobei überprüft wird, ob die zu den gespeicherten BitratenWerten (x,y) durch die neue virtuelle Verbindung hinzukommenden Bitraten-Werte (x,y) zu einer diese Zulässigkeit verneinenden Überschreitung des Bitraten-Maximalwertes (w) führen,
**dadurch gekennzeichnet**,
daß eine Bitraten-Auswertungseinrichtung (H) geeignet ist, vor Einrichtung einer neuen virtuellen Verbindung in jeder betreffenden ATM-Leitung
für jede der über die Letztere bereits eingerichteten virtuellen Verbindungen sowie für die einzurichtende neue virtuelle Verbindung jeweils ein Produkt (M) aus dem festgelegten mittleren Bitratenwert (y) einerseits und der Differenz zwischen dem festgelegten Spitzenbitratenwert (x) und dem festgelegten mittleren Bitratenwert (y) andererseits zu bilden (S),
alle auf diese Weise - betreffend diese ATM-Leitung - gebildeten Produkte zu einer Produktesumme aufzusummieren (w), hieraus einen Quadratwurzelwert zu bilden (R),
diesen Quadratwurzelwert mit einem Vergrößerungs-Faktor zu multiplizieren (T), oder ihn durch den Kehrwert des Vergrößerungs-Faktors zu dividieren, und
zu dem auf diese Weise vergrößerten Quadratwurzelwert die festgelegten mittleren Bitratenwerte der diese ATM-Leitung betreffenden virtuellen Verbindungen, also der bereits eingerichteten sowie der neu einzurichtenden virtuellenVerbindungen, hinzuzuaddieren,
und daß die Schaltungsanordnung geeignet ist, anhand eines so ermittelten Auswertungsergebnisses in der betreffenden ATM-Vermittlungseinrichtung (z.B. A) zu entscheiden (V) , ob eine neu einzurichtende Verbindung noch über die jeweils betreffende ATM-Leitung geführt wird, indem diese Verbindung nur eingerichtet wird, wenn dieses Auswertungsergebnis den für die betreffende ATM-Leitung vorgegebenen zulässigen Bitraten Maximalwert (w), der die Einhaltung der vorgegebenen Verkehrsgüteanforderungen bezüglich eines Verlustes an ATM-Zellen und/ oder von Wartedauern garantiert, nicht überschreitet.

2. Schaltungsanordnung nach Anspruch 1,
**dadurch gekennzeichnet,**
daß die Bitraten-Auswertungseinrichtung (H) zur Bildung des Auswertungsergebnisses zu dem vergrößerten Quadratwurzelwert auch noch die die jeweilige
ATM-Leitung betreffende größte Spitzenbitrate hinzuaddiert.

3. Schaltungsanordnung nach Anspruch 1,
**dadurch gekennzeichnet,**
daß die Abfolge der Quadratwurzelwert-Bildung und der Multiplikation mit dem Vergrößerungsfaktor vertauscht sind und daß diese Multiplikation mit dem Quadrat des Vergrößerungsfaktors erfolgt.

4. Schaltungsanordnung für Kommunikationseinrichtungen (A) mit asynchronem Transfermodus (ATM),
die geeignet sind, für jede virtuelle Verbindung einerseits eine Spitzenbitzrate sowie eine mittlere Bitrate durch Speicherung entsprechender Daten in einer ATM-Vermittlungseinrichtung (z.B. A) festzulegen, und
andererseits zu überwachen (G), ob der von ihr geführte ATM-Nachrichtenstrom hinsichtlich tatsächlicher mittlerer Bitrate und tatsächlicher Spitzenbitrate die gespeicherten entsprechenden Raten-Werte einhält oder übersteigt, und
außerdem bei einem Übersteigen entsprechende Gegenmaßnahmen einzuleiten,
und wobei die Kommunikationseinrichtungen geeignet sind, die Zulässigkeit des Einrichtens einer neuen virtuellen Verbindung über eine jede der für sie in Frage kommenden ATM-Leitungen anhand einesjeweils leitungsbezogen als zulässig festgelegten Bitraten-Maximalwertes (w) zu prüfen, wobei überprüft wird, ob die zu den gespeicherten Bitraten-Werten durch die neue virtuelle Verbindung hinzukommenden Bitraten-Werte (x,y) zu einer diese Zulässigkeit verneinenden Überschreitung des Bitraten-Maximalmalwertes (w) führen,
**dadurch gekennzeichnet,**
daß eine Bitraten-Auswertungseinrichtung (H) geeignet ist, vor Einrichtung einer neuen virtuellen Verbindung in jeder betreffenden ATM-Leitung
für jede der über die Letztere bereits eingerichteten virtuellen Verbindungen sowie für die einzurichtende neue virtuelle Verbindung jeweils ein Produkt (m) aus dem festgelegten mittleren Bitratenwert (y) einerseits und der Differenz zwischen dem festgelegten Spitzenbitratenwert (x) und dem festgelegten mittleren Bitratenwert (y) andererseits zu bilden (S),
alle auf diese Weise - betreffend diese ATM-Leitung-gebildeten Produkte zu einer Produktesumme aufzusummieren,
die festgelegten mittleren Bitratenwerte (y) der diese ATM-Leitung betreffenden virtuellen Verbindungen, also der bereits eingerichteten sowie der neu einzurichtenden virtuellen Verbindungen zu einer Bitraten-Summe zu addieren,
von dem für die betreffende ATM-Leitung vorgegebenen Bitraten-Maximalwert (w), der die Einhaltung der vorgegebenen Verkehrsgüteanforderungen bezüglich eines Verlustes an ATM-Zellen und/oder von Wartedauern garantiert, die Bitraten-Summe zu subtrahieren,
dieses Subtraktionsergebnis durch einen Vergrößerungs-faktor dividiert, oder mit dessen Kehrwert zu multiplizieren, aus der auf diese Weise veränderten Summe einen Quadratwert zu bilden, und
diesen Quadratwert mit der Produktesumme zu vergleichen,
und daß die Schaltungsanordnung geeignet ist, aufgrund dieses Vergleiches in der betreffenden ATM-Vermittlungseinrichtung (z.B. A) zu entscheiden (V), ob eine neu einzurichtende Verbindung noch über die jeweils betreffende ATM-Leitung geführt wird, indem diese Verbindung nur eingerichtet wird, wenn diese Produktsumme den Quadratwert nicht überschreitet.

5. Schaltungsanordnung nach Anspruch 4,
**dadurch gekennzeichnet,**
daß in die Bitratensumme auch noch die die jeweilige ATM-Leitung betreffende größte Spitzenbitrate einbezogen ist.

6. Schaltungsanordnung nach Anspruch 4,
**dadurch gekennzeichnet,**
daß die Abfolge der Veränderung des Subtraktionsergebnisses durch Division durch den Vergrößerungsfaktor oder durch Multiplikation mit dessen Kehrwert einerseits und die Quadratwertbildung miteinander vertauscht sind und daß hierzu anstelle des Vergrößerungsfaktors bzw. seines Kehrwertes der betreffende Wurzelwert verwendet wird.

7. Schaltungsanordnung nach Anspruch 1 oder Anspruch 4,
**dadurch gekennzeichnet,**
daß bei einer Einrichtung einer virtuellen Verbindung mit überdurchschnittlicher Bitrate letztere vom Bitraten-Maximalwert vorab subtrahiert wird und dieses Subtraktionsergebnis als Bitraten-Maximalwert verwendet wird
und daß die Bitratenwerte dieser virtuellen Verbindung bei dem betreffenden Vergleichsvorgang unberücksichtigt bleiben.

## Claims

1. Circuit arrangement for communications devices (A) having an asynchronous transfer mode (ATM), which communications devices are suitable for any virtual connection, on the one hand for defining a peak bit rate (x) and a mean bit rate (y) by storing appropriate data in an ATM switching device (for example A), and on the other hand for monitoring (G) whether the ATM information stream carried by it maintains or exceeds the corresponding stored rate values in terms of the actual mean bit rate and the actual peak bit rate, and
in addition for initiating appropriate countermeasures in the event of these rates being exceeded,
and the communications devices being suitable for checking the reliability of the setting up of a new virtual connection via each of the ATM lines in question for it, using a maximum bit rate value (w) which is in each case line-related and is defined as being reliable, a check being carried out to determine whether those bit rate values (x,y) which are to be added to the stored bit rate values (x,y) as a result of the new virtual connection lead to the maximum bit rate value (w) being exceeded in a manner which negates this reliability,
characterized
in that a bit rate evaluation device (H) is suitable for forming (S), before setting up a new virtual connection in each relevant ATM line for each of the virtual connections already set up via the latter and for the new virtual connection to be set up, in each case one product (m) of the defined mean bit rate value (y), on the one hand, and the difference between the defined peak bit rate value (x) and the defined mean bit rate value (y), on the other hand, adding (w) all the products formed in this way - relating to this ATM line - to form a product sum, forming (R) a square-root value from this, multiplying (T) this square-root value by a multiplication factor, or dividing it by the reciprocal of the multiplication factor, and adding, to the square-root value multiplied in this way, the defined mean bit rate values of the virtual connections relating to this ATM line, that is to say of the virtual connections which have already been set up as well as those which are newly to be set up,
and in that the circuit arrangement is suitable for deciding (V), on the basis of an evaluation result determined in this way, in the relevant ATM switching device (for example A) whether a connection which is newly to be set up is also passed via the respectively relevant ATM line, in that this connection is set up only if this evaluation result does not exceed the maximum permissible bit rate value (w) specified for the relevant ATM line, which maximum bit rate value (w) guarantees compliance with the specified traffic quality requirements in terms of any loss at ATM cells and/or of waiting durations.

2. Circuit arrangement according to Claim 1, characterized in that the bit rate evaluation device (H) also adds to the multiplied square-root value the largest peak bit rate relevant for the respective ATM line in order to form the evaluation result.

3. Circuit arrangement according to Claim 1, characterized in that the sequence of square-root value formation and multiplication by the multiplication factor are interchanged, and in that this multiplication is carried out using the square of the multiplication factor.

4. Circuit arrangement for communications devices (A) having an asynchronous transfer mode (ATM), which communications devices are suitable for any virtual connection, on the one hand for defining a peak bit rate and a mean bit rate by storing appropriate data in an ATM switching device (for example A), and on the other hand for monitoring (G) whether the ATM information stream carried by it maintains or exceeds the corresponding stored rate values in terms of the actual mean bit rate and the actual peak bit rate, and
in addition for initiating appropriate countermeasures in the event of these rates being exceeded,
and the communications devices being suitable for checking the reliability of the setting up of a new virtual connection via each of the ATM lines in question for it, using a maximum bit rate value (w) which is in each case line-related and is defined as being reliable, a check being carried out to determine whether those bit rate values (x,y) which are to be added to the stored bit rate values as a result of the new virtual connection lead to the maximum bit rate value (w) being exceeded in a manner which negates this reliability,
characterized
in that a bit rate evaluation device (H) is suitable for forming (S), before setting up a new virtual connection in each relevant ATM line for each of the virtual connections already set up via the latter and for the new virtual connection to be set up, in each case one product (m) of the defined mean bit rate value (y), on the one hand, and the difference between the defined peak bit rate value (x) and the defined mean bit rate value (y), on the other hand, adding all the products formed in this way - relating to this ATM line - to form a product sum, adding the defined mean bit rate values (y) of the virtual connections relating to this ATM line, that is to say of the virtual connections which have already been set up as well as the virtual connections which are newly to be set up, to form a bit rate sum, subtracting the bit rate sum from the maximum bit rate value (w) which is specified for the relevant ATM line and guarantees compliance with the specified traffic quality requirements in terms of any loss at ATM cells and/or waiting durations,
divides this subtraction result by a multiplication factor, or multiplying by the reciprocal of said multiplication factor,
forming a square value from the sum changed in this way, and comparing this square value with the product sum, and in that the circuit arrangement is suitable for deciding (V), on the basis of this comparison in the relevant ATM switching device (for example A), whether a connection which is newly to be set up is also carried via the respective relevant ATM line, in that this connection is set up only if this product sum does not exceed the square value.

5. Circuit arrangement according to Claim 4, characterized in that the largest peak bit rate which is relevant for the respective ATM line is included in the bit rate sum.

6. Circuit arrangement according to Claim 4, characterized in that the sequence of changing the subtraction result by division by the multiplication factor or by multiplication by its reciprocal, on the one hand, and the formation of the square value are interchanged with one another, and in that the relevant square-root value is used for this purpose instead of the multiplication factor or its reciprocal.

7. Circuit arrangement according to Claim 1 or Claim 4, characterized in that, when setting up a virtual connection with an above-average bit rate, the latter is subtracted in advance from the maximum bit rate value, and this subtraction result is used as the maximum bit rate value, and in that the bit rate values of this virtual connection are not considered in the relevant comparison process.

## Revendications

1. Montage pour dispositifs de communication (A) à mode de transfert asynchrone (ATM),
qui sont aptes, pour chaque communication virtuelle,
d'une part à fixer un débit binaire (x) de pointe ainsi qu'un débit binaire moyen (y) par mémorisation de données correspondantes dans un dispositif (par exemple A) de commutation ATM,
d'autre part à contrôler (G) si le débit binaire moyen effectif et le débit binaire effectif de pointe du flux d'informations ATM passant par lui, respecte ou dépasse les valeurs de débit correspondantes mémorisées et
en outre à déclencher la prise de contre-mesures correspondantes en cas de dépassement,
les dispositifs de communication étant aptes à vérifier l'admissibilité de l'établissement d'une nouvelle communication virtuelle passant par chacune des lignes ATM qui concerne cette communication, en référence à une valeur maximum (w) de débit binaire définie comme admissible et se rapportant à chaque ligne, sachant qu'il est contrôlé, si les valeurs (x, y) de débit binaire s'ajoutant aux valeurs (x, y) de débit binaire mémorisées du fait de la nouvelle communication virtuelle conduisent à ce qu'une valeur (w) maximum de débit binaire privant de cette admissibilité est dépassée,
caractérisé en ce que
un dispositif (H) d'exploitation de débit binaire est apte à former (S), avant qu'une nouvelle communication virtuelle soit établie dans chaque ligne ATM concernée,
pour chacune des communications virtuelles déjà établies sur cette dernière ainsi que pour la nouvelle communication virtuelle à établir, un produit (M) de la valeur moyenne fixée (y) de débit binaire d'une part et de la différence entre la valeur (x) fixée de débit binaire de pointe et la valeur moyenne fixée (y) de débit binaire d'autre part,
à faire (N) la somme de tous les produits formés de cette manière et concernant cette ligne ATM pour former une somme de produits,
à faire (R) de cette somme de produits la racine carrée,
à multiplier (T) cette racine carrée par un facteur d'amplification ou à la diviser par l'inverse du facteur d'amplification,
à additionner à la racine carrée amplifiée de cette manière les valeurs moyennes fixées de débits binaires des communications virtuelles concernant cette ligne ATM, donc des communications virtuelles déjà établies ainsi que des communications virtuelles à rétablir,
le montage est apte à décider (V) en référence à un résultat d'exploitation déterminé de cette manière, dans le dispositif (par exemple A) de commutation ATM concerné, si une communication à rétablir passe encore par la ligne ATM concernée, par le fait que cette communication n'est qu'établie que si ce résultat d'exploitation ne dépasse pas la valeur (w) maximum de débit binaire admissible prescrite pour la ligne ATM concernée, laquelle valeur garantit le respect des exigences prescrites de qualité de trafic en ce qui concerne une perte de cellules ATM et/ou des durées d'attente.

2. Montage suivant la revendication 1,
caractérisé en ce que
le dispositif (H) d'exploitation de débit binaire additionne, pour former le résultat de l'exploitation, à la racine carrée amplifiée encore le plus grand débit binaire de pointe concernant la ligne ATM considérée.

3. Montage suivant la revendication 1,
caractérisé en ce que
l'ordre de formation de racine carrée et de multiplication par le facteur d'amplification est inversé et cette multiplication s'effectue par le carré du facteur d'amplification.

4. Montage pour dispositifs (A) de communication à mode de transfert asynchrone (ATM),
qui sont aptes, pour chaque communication virtuelle,
à fixer d'une part un débit binaire de pointe ainsi qu'un débit binaire moyen par mémorisation de données correspondantes dans un dispositif (par exemple A) de commutation ATM,
d'autre part à contrôler (G), si le débit binaire moyen effectif et le débit binaire effectif de pointe du flux d'informations ATM passant par lui respecte ou dépasse les valeurs de débit correspondantes mémorisées et à déclencher, en cas de dépassement, des contre-mesures correspondantes,
les dispositifs de communication étant aptes à vérifier l'admissibilité de l'établissement d'une nouvelle communication virtuelle passant par chacune des lignes ATM concernant cette dernière en référence à une valeur maximum (w) de débit binaire se rapportant à chaque ligne et définie comme admissible, sachant qu'il est vérifié si les valeurs (x, y) de débit binaire s'ajoutant, du fait de la nouvelle communication virtuelle, aux valeurs de débit binaire mémorisées conduisent à un dépassement de la valeur (w) maximum de débit binaire, qui prive de l'admissibilité,
caractérisé en ce que
un dispositif (H) d'exploitation de débit binaire est apte, à former (S) avant qu'une nouvelle communication virtuelle soit établie sur chaque ligne ATM concernée,
pour chacune des communications virtuelles déjà établies sur cette dernière ainsi que pour la nouvelle communication virtuelle à établir un produit (M) de la valeur moyenne (y) fixée de débit binaire d'une part et de la différence entre la valeur fixée (x) de débit binaire de pointe et de la valeur moyenne fixée (y) de débits binaire d'autre part,
à faire la somme de tous les produits formés de cette manière et concernant cette ligne ATM, pour former une somme de produits,
à additionner les valeurs moyennes (y) fixées de débit binaire des communications virtuelles concernant cette ligne ATM, donc des communications virtuelles déjà établies ainsi que des communications virtuelles à rétablir, pour former une somme de débits binaires, à soustraire de la valeur maximum (w) de débit binaire prescrite pour la ligne ATM concernée, qui garantit le respect des exigences prescrites de qualité de trafic en ce qui concerne une perte de cellules ATM et/ou des durées d'attente, la somme de débits binaires,
à diviser ce résultat de soustraction par un facteur d'amplification, ou à le multiplier par l'inverse de celui-ci,
à élever la somme modifiée de cette manière au carré et à comparer ce carré à la somme de produits,
et le montage est apte à décider (V) sur la base de cette comparaison dans le dispositif (par exemple A) de commutation ATM concerné, si une communication à rétablir passe encore par la ligne ATM concernée, par le fait que cette communication n'est rétablie que si cette somme de produits ne dépasse pas le carré.

5. Montage suivant la revendication 4,
caractérisé en ce que
on inclut encore dans la somme de débits binaires le plus grand débit binaire de pointe concernant la ligne ATM concernée.

6. Montage suivant la revendication 4,
caractérisé en ce que
l'ordre, qui était donné par la modification du résultat de soustraction par division par le facteur d'amplification ou par multiplication par l'inverse de celui-ci d'une part et par l'élévation au carré d'autre part, est inversé et qu'il est utilisé à cet effet la racine carrée concernée à la place du facteur d'amplification ou de son inverse.

7. Montage suivant la revendication 1 ou 4,
caractérisé en ce que
lorsqu'une communication virtuelle est établie à un débit binaire dépassant la moyenne, ce dernier est soustrait au préalable de la valeur maximum de débit binaire et le résultat de cette soustraction est utilisé comme valeur maximum de débit binaire et les valeurs de débit binaire de cette communication virtuelle demeurent non prises en compte lors de l'opération de comparaison concernée.
